# EUROPEAN PATENT SPECIFICATION

(11) **EP 3 722 485 B1**
(45) Date of publication and mention of the grant of the patent: **28.12.2022**
(21) Application number: 20169302.5
(22) Date of filing: 14.04.2020
(51) Int. Cl.: D06F 39/02, D06F 103/22, D06F 105/42

(54) **WASHING MACHINE**
WASCHMASCHINE
LAVE-LINGE

(30) Priority: 12.04.2019 KR 20190042786
(43) Date of publication of application: 14.10.2020
(73) Proprietor: LG Electronics Inc., 07336 SEOUL (KR)
(72) Inventor: CHAE, Kyosoon, 08592 Seoul (KR); KIM, Hyundong, 08592 Seoul (KR); OH, Sooyoung, 08592 Seoul (KR)
(74) Representative: Vossius & Partner Patentanwälte Rechtsanwälte mbB

(56) References cited:
- EP-A2- 2 733 249
- DE-B3-102007 050 920
- KR-A- 20150 103 988
- US-A1- 2010 161 143

## Description

The present disclosure relates to a washing machine, and more particularly, to a washing machine capable of automatically providing the washing machine with various detergents.

A washing machine is a device handling laundry through washing, dehydration and/or drying and the like. The washing machine is a device removing contamination of a laundry by using water and detergents.

Recently, there is a need to develop a device automatically mixing and providing various detergents according to various laundries, so technical features related therewith are under development.

During supplying various detergents, it is necessarily required to employ detecting function to let user refill detergent in case of lack of detergent in a cartridge.

U.S. Patent Publication No. 2010/0161143 A1 discloses detecting residual amount of detergent of the cartridge with a sensor for detecting residual liquid. At this case, detecting detergent is performed by penetration of light using a source of light like LED or something. That is, an electric signal is variable according to a type of detergent or properties of a cartridge. In other words, an electric signal detected by penetrating rate of light is variable according to a circumstance employing a washing machine, or to incorrectly mounted cartridge, so there may be a problem to precisely detect a residual amount of detergent.

KR 2015 0103988 A discloses a detergent dispenser and a washing machine with the same.

One object of the present disclosure is to provide a washing machine capable of precisely detecting a residual amount of detergent regardless of installation environment.

Another object of the present disclosure is to provide a washing machine capable of precisely detecting a residual amount of detergent regardless of properties and size of a cartridge.

Another object of the present disclosure is to provide a washing machine capable of simply detecting a residual amount of detergent.

Objects of the present disclosure should not be limited to the aforementioned objects and other unmentioned objects will be clearly understood by those skilled in the art from the following description.

In accordance with an embodiment of the present disclosure, the above and other objects can be accomplished by the provision of washing machine as defined by claim 1, including a cabinet, a tub disposed in the cabinet to receive water, a drum rotatably disposed in the tub to contain a laundry and a detergent supply device disposed at the cabinet to supply detergent into the tub, wherein the detergent supply device comprises a plurality of cartridges containing detergent, a pump suctioning detergent from the plurality of cartridges, a passage guiding detergent discharged from the pump into the tub and a plurality of electrode sensors disposed at a side of the plurality of cartridges, wherein each of the plurality of electrode sensors comprises an electrode plate detecting electric signal and a terminal transmitting the electric signal detected by the electrode plate, wherein the electrode plate has a first surface contacted with detergent contained in the cartridge and a second surface connected to the terminal.

The electrode plate has a smaller width at a lower end thereof than an upper end thereof.

An opening is formed at a rear wall of the cartridge, and the electrode plate is disposed to be in a contact with the rear wall of the cartridge so that the first surface thereof is exposed to the opening.

The opening is disposed to be in a contact with a lower end of the electrode plate.

The opening may be spaced apart from a lower surface of the cartridge.

The detergent supply device may further comprise a docking valve disposed at a lower side of the rear wall of the cartridge, the docking valve connecting the pump and the cartridge, wherein the docking valve is provided with a detergent inlet through which detergent in the cartridge is sucked into the pump, and the opening is disposed at a position higher than the detergent inlet.

The washing machine may further comprise a housing accommodating the cartridge, the housing having a connecting wall which is disposed in a rear direction of the cartridge, wherein the electrode plate is disposed between the connecting wall of the housing and the cartridge rear wall of the cartridge.

The detergent supply device may further comprise a housing accommodating the cartridge, wherein the terminal comprising a connecting portion connecting to the housing, a first curved portion bending from the connector and a second curved portion bending upward the cartridge from the first curved portion, wherein a protruding portion is included in the second curved portion to contact the electrode plate.

The housing may comprise a connecting wall disposed in a rear direction of the cartridge, wherein the connecting portion of the terminal is connected to the connecting wall.

The connecting portion may be mounted to a protrusion protruded from the connecting wall in an opposite direction from the cartridge.

The protruding portion may be contacted with the second surface of the electrode plate.

A connecting wall opening may be formed at the connecting wall, and the electrode plate is contacted with the protruding portion through the connecting wall opening.

The electrode plate may be formed in a shape of 'L'

The plurality of electrode sensors may comprise at least two of the plurality of electrode sensors have a different height each other.

The washing machine may comprise three electrode sensors including three electrode plates and three terminals are disposed at the side of the cartridge, wherein the three electrode plates comprise a first and second electrode plates having a height of a first height and a third electrode plate having a height of a second height higher than the first height.

Each of the first and second electrode plates may be formed in a shape of 'L'.

A first, second and third openings corresponding to the first, second and third electrode plates may be formed at a rear wall of the cartridge, and wherein the first surface of the first, second and third electrode plates contact with the detergent contained in the cartridge through the first, second and third openings.

The first and second openings may be spaced apart from a bottom surface of the cartridge.

The first, second and third openings may be disposed respectively at a lower end of the first, second and third electrode plates.

The electric signal may be an electric current or an electric voltage generated between the two electrode plates disposed at the side of the cartridge.

The washing machine including the same according to the present disclosure provide at least the following effects.

First, the washing machine according to an exemplary embodiment of the present disclosure has an advantage of reducing a chance of misjudging of a detergent supply device by directly detecting a residual amount of detergent with making use of a change of an electric signal.

Second, the washing machine according to an exemplary embodiment of the present disclosure has an advantage of precisely detecting a residual amount of detergent regardless of properties and size of a cartridge because of using an electric current electrified through detergent.

Third, the washing machine according to an exemplary embodiment of the present disclosure has an advantage of having a simple operating procedure because of using an electric current electrified through detergent contained in a cartridge.

Fourth, the washing machine according to an exemplary embodiment of the present disclosure has an advantage of simplifying a structure for detecting a residual amount of detergent because there is a need for only terminal and electric wire.

Fifth, the washing machine according to an exemplary embodiment of the present disclosure has an advantage of reducing a chance that detergent is hardened in a terminal because a contacting portion between the terminal and detergent is small.

It should be understood that advantageous effects according to the present invention are not limited to the effects set forth above and other advantageous effects of the present disclosure will be apparent from the detailed description of the present disclosure.

Details of other embodiments will be described in the detailed description with reference to the accompanying drawings.
FIG. 1 is a front view of a washing machine according to an exemplary embodiment of the present disclosure.
FIG. 2 is a perspective view of the washing machine according to an exemplary embodiment of the present disclosure.
FIG. 3 is a lateral cross-sectional view of the washing machine according to an exemplary embodiment of the present disclosure.
FIG. 4 is a flow chart of the washing machine according to an exemplary embodiment of the present disclosure.
FIG. 5 is a schematic view of a detergent supply device according to an exemplary embodiment of the present disclosure.
FIG. 6 is a schematic view showing a rear side of the detergent supply device according to an exemplary embodiment of the present disclosure.
FIG. 7 is a schematic view of the detergent supply device viewed from above.
FIG. 8 is an exploded perspective view of the detergent supply device according to an exemplary embodiment of the present disclosure.
FIG. 9 is a schematic view of a cartridge of the detergent supply device according to an exemplary embodiment of the present disclosure.
FIG. 10 is a schematic view showing an electrode sensor of the detergent supply device according to an exemplary embodiment of the present disclosure.
FIG. 11 is a schematic view showing the electrode sensor of the detergent supply device according to an exemplary embodiment of the present disclosure.
FIG. 12 is a schematic view showing a passage switching valve according to an exemplary embodiment of the present disclosure.
FIG. 13 is a schematic view showing a pump of the detergent supply device according to an exemplary embodiment of the present disclosure.
FIG. 14 is a schematic view showing a state that the cartridge is inserted in the structure shown in FIG. 10.
FIG. 15 is a schematic view showing positions of a first electrode plate, a second electrode plate and a third electrode plate of a rear side of the cartridge according to an exemplary embodiment of the present disclosure.
FIG. 16 is a schematic view showing a terminal disposed at a rear side of the cartridge according to an exemplary embodiment of the present disclosure.
FIG. 17 is a schematic view showing the electrode sensor according to an exemplary embodiment of the present disclosure.
FIG. 18 is a schematic view showing a state that the terminal is spaced apart from a lower surface of the cartridge according to an exemplary embodiment of the present disclosure.
FIG. 19 is a schematic view showing a difference between an upper width of the electrode plate and a lower width of the electrode plate according to an exemplary embodiment of the present disclosure.
FIG. 20 is a schematic view showing a passage connector.
Fig. 21 is an enlarged view showing the passage connector shown in FIG. 20.

Advantages and features of the present disclosure and methods of achieving the advantages and features will be apparent with reference to embodiments described below in detail in conjunction with the accompanying drawings. However, the present disclosure is not limited to embodiments disclosed below, but may be implemented in various forms, only the present embodiments are provided so that a disclosure of the present disclosure is complete and a disclosure of a scope of the invention is fully understood by those skilled in the art to which the present disclosure belongs, and the present disclosure is only defined by the scope of the claims. The same reference numerals indicate the same components through the specification.

Hereinafter, a washing machine according to an exemplary embodiment of the present disclosure will be described with reference to the accompanying drawings.

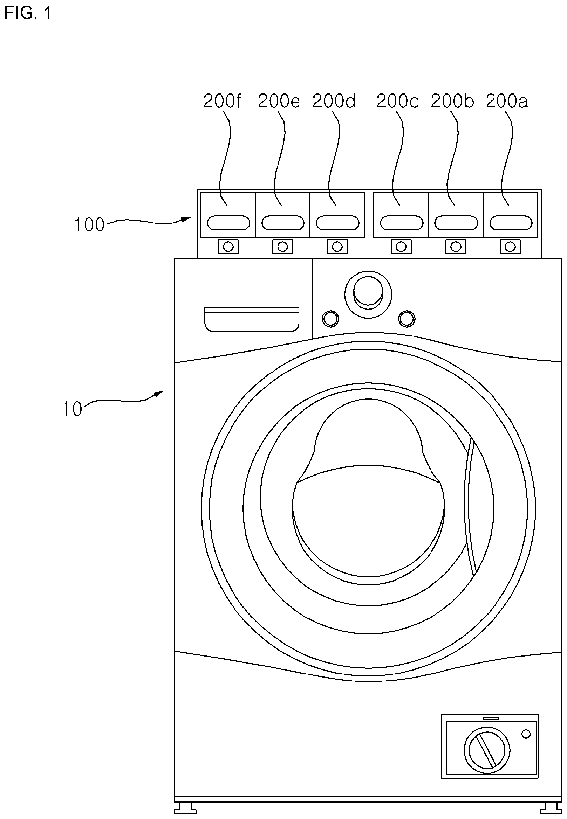

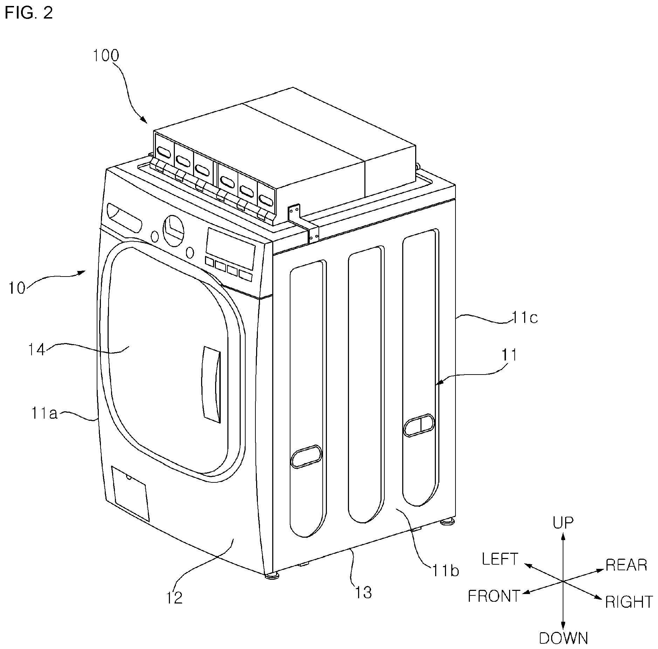

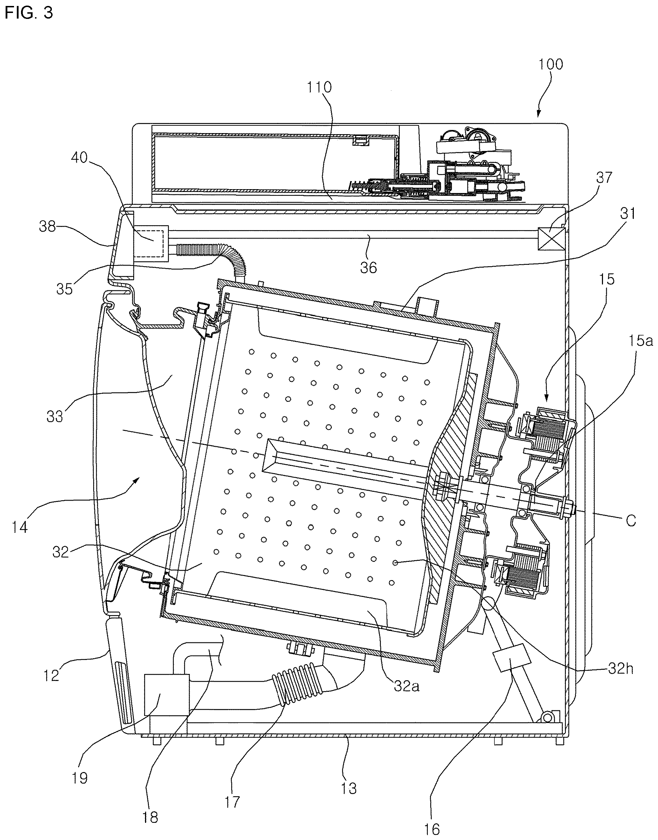

Referring to FIG. 1 through FIG. 3, a washing machine according to an exemplary embodiment of the present disclosure includes a cabinet 10 and a detergent supply device 100 disposed at an upper surface of the cabinet 10.

The cabinet 10 is formed as an appearance of a washing machine, and a tub 31 and a drum 32 are disposed in the cabinet 10. The cabinet 10 includes a main frame 11 having a front surface opened, a left surface 11a, a right surface 11b and rear surface 11c, a front panel 12 having a loading/unloading opening and connected to the front surface of the main frame 11, and a planar base 13 supporting the main frame 11 and the front panel 12 from the below. A door 14 opening and closing the loading/unloading opening is mounted rotatably to the front panel 12.

The front panel 12 and the tub 31 are communicated to each other with a circular gasket 33. A frontal end portion of the gasket 33 is mounted at the front panel 12, a rear end portion of the gasket 33 is mounted fixedly along a circumference of an inlet of the tub 31. The gasket 33 is formed as a material having elasticity and capable of preventing water in the tub 31 from leaking.

A driving portion 15 is disposed at a rear side of the drum 32 so as to rotate the drum. Further, there may be provided with a water supply hose (not shown) guiding water supplied from an external water source and a water supply portion 37 controlling water supplied from the water supply hose to a water supply passage 36. The water supply portion 37 may include a water supply valve (not shown) opening/closing the water supply passage 36.

The cabinet 10 includes a drawer 38 accommodating detergent and a drawer housing 40 accommodating the drawer 38 so that the drawer 38 is withdrawable therefrom. The detergent may also include bleach or fabric softner as well as detergent for laundry. Detergent accommodated in the drawer 38 is provided to the tub 31 through a water supply bellows 35 when water is supplied through the water supply passage 36. A water supply hole (not shown) connected to the water supply bellows 35 may be disposed at a side of the tub 31.

The tub 31 may include a drain discharging water, and a drain bellows 17 may be connected to the drain. A drain pump 19 pumping water discharged from the tub 31 through the drain bellows 17 so as to discharge the water to the outside of the washing machine.

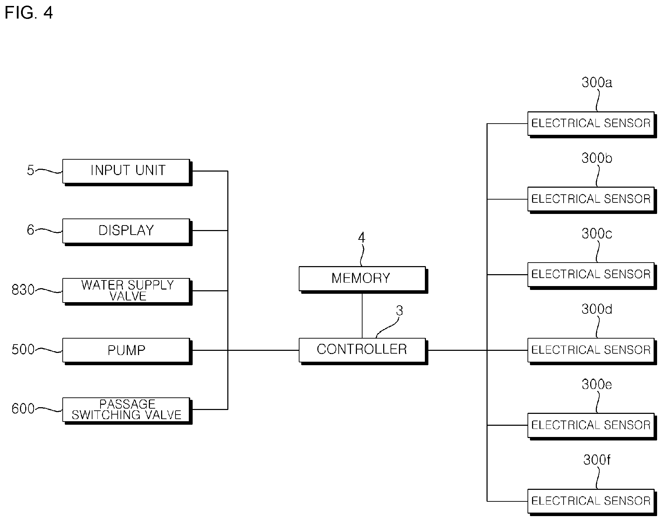

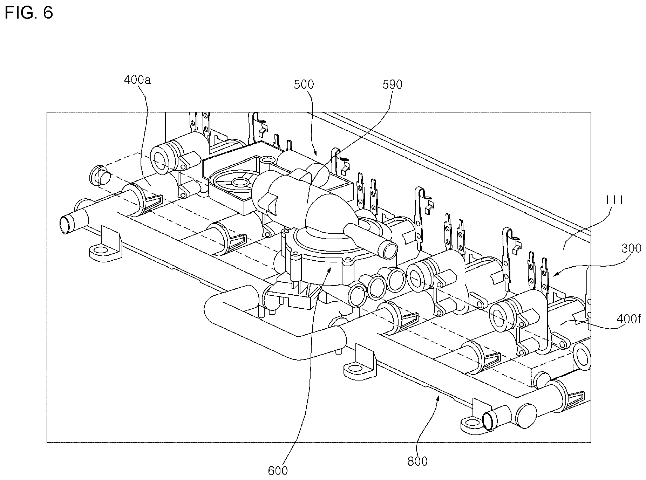

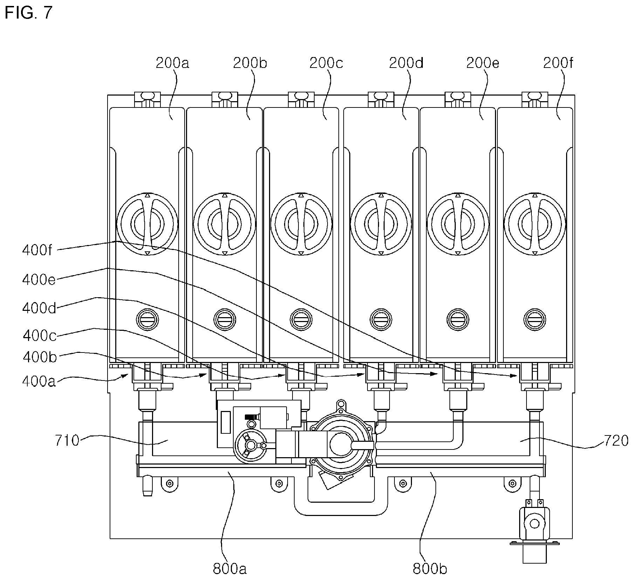

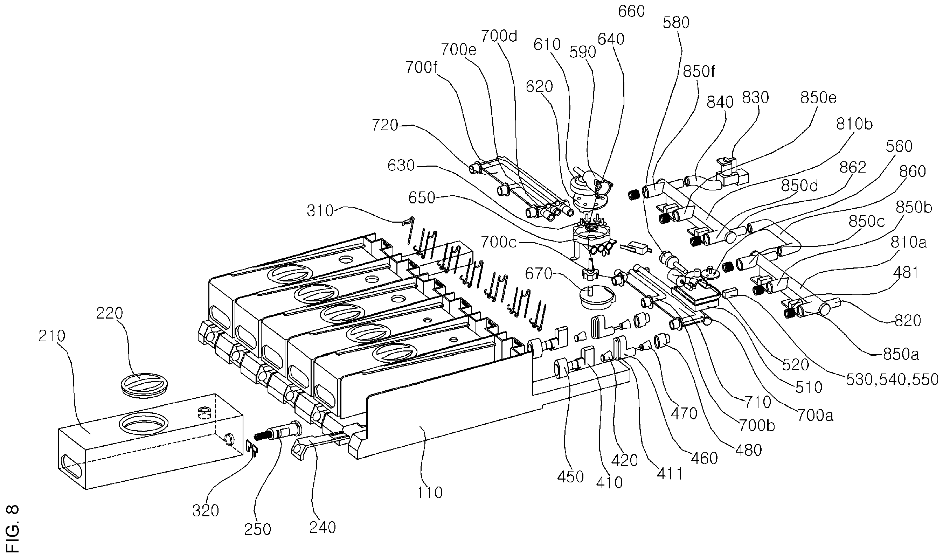

Referring to FIG. 1 through FIG. 8, a water supply device 100 mounted at an upper surface of the cabinet according to an exemplary embodiment of the present disclosure will be described in the following.

The water supply device 100 includes a housing 110 having a door disposed at a front side thereof and defining an accommodating room inside thereof, and a cover 120 opening and closing the housing 110.

An opening formed as a rectangular cuboid made of various surfaces is disposed at a front side of the housing 110, and each of the opening is extended from a rear side of the housing 110 so as to form a room for a cartridge corresponding to each of the opening. That is, each of a plurality of cartridges 200, 200b, 200c, 20d, 200e, 200f (hereinafter referred to as "200") may be inserted to each opening room.

Detergent is accommodated in each of the cartridges 200, and preferably each detergent may have differential composition ratio. Although the number of cartridges according to an exemplary embodiment of the present disclosure may be six, the number of the cartridges are not limited to any particular number, and it is preferable to employ three cartridges or more.

An accommodating space for accommodating passages 700, 800, a passage switching valve 600 and a pump 500 is disposed at a rear side of the cartridge. Cartridge connecting walls 111 are installed between the accommodating space and an accommodating space disposed at a rear side thereof so as to accommodate parts, and then a terminal and an electrode sensor 300 having a electrode plate are installed at the cartridge connecting walls.

The pump 500 and the passage switching valve 600 may be controlled by a controller 3. Information about contents of detergent and various composition ratio of contents may be stored in a memory 4. One of the contents is accommodated in each of the cartridges 200, and the controller 3 controls the pump 500 and the passage switching valve 600 according to information stored in the memory 4.

The washing machine may further include an input unit 5 for obtaining various control command related with an operation of the washing machine from a user. The input unit 5 may be disposed at an upper side of the front panel 12. A display 6 indicating the operating status of the washing machine may be disposed at the front panel 12.

The controller 3 may select a type of detergent from the memory 4 according to a setting value that a user had input with the input unit 5, and the controller 3 may identify information about the detergent. And then, the controller 3 may control the pump 500 and the passage switching valve 600 so as to eject the selected detergent. Thus, the controller 3 may control the pump 500 corresponding to the cartridge 200 accommodating the selected detergent according to the composition ratio and the passage switching valve 600.

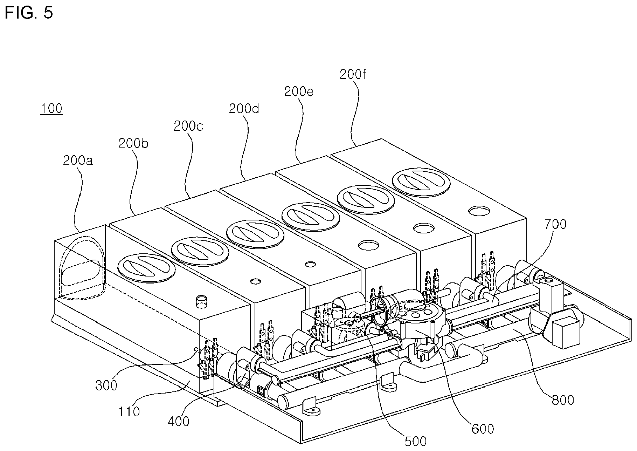

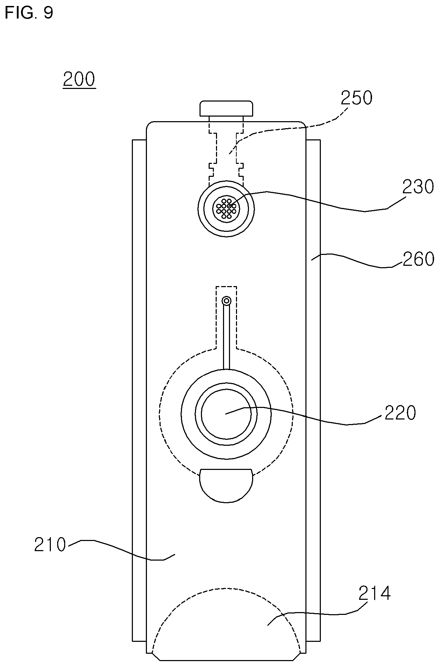

Hereinafter, referring to FIG. 5 through FIG. 8 and FIG. 9, cartridges 200 installed at the detergent supply device according to an exemplary embodiment of the present disclosure will be described.

The cartridges 200 may include a cartridge body 210 accommodating detergent, a detergent inlet 211 for injecting detergent into the cartridge body, cap 220 for opening and closing the detergent inlet 211, a membrane 230 allowing air in the cartridges to flow to the outdoor, a cartridge locker 240 allowing the cartridge 200 to fixedly connect to the housing 110 in a case that the cartridge is inserted to the housing 110, a docking valve 250 connecting a check valve 400 and the cartridge 200 and a rib 260.

The cartridge body 210 may be formed such as being corresponded to the appearance of the housing 110 so that the cartridge body 210 is snugly inserted to the accommodating room disposed at a front side of the housing 110. According to an exemplary embodiment of the present disclosure, the cartridge accommodator 110 takes the form of rectangular, and also the cartridge 200 takes the form of rectangular corresponding to the appearance of the cartridge accommodator, and further the cartridge accommodators may have rounded corner so as to reduce abrasion occurred during assembling and disassembling of the cartridge 200.

The detergent inlet 211 may be disposed at a front side of the cartridge body 210, and a cap 220 opening and closing the detergent inlet 211 is disposed at the detergent inlet 211. When it is required to put detergent into the washing machine, detergent is put into the cartridge body 210 through the cap 220 opened. And then, the cap 220 must be closed after finishing putting detergent therein so as to prevent detergent from being discharged to outdoor.

The membrane 230 guiding the air in the cartridge to flow to the outdoor may be mounted at a front side and an upper side of the cartridge body 210. The membrane 230 may keep a pressure of the cartridge and an external pressure the same so as to prevent detergent of the cartridge from supplying to the check valve inadvertently. Further, it is impossible for liquid-phase detergent to discharge to the outdoor through the membrane 230, so it is possible to prevent detergent from being harden by evaporation.

The cartridge locker 240 is disposed at a front surface of the cartridge accommodator 110 and a lower side of the cartridge. The cartridge locker 240 may secure the cartridge 200 for preventing the cartridge from being disassembled when the cartridge is snugly inserted thereto.

The docking valve 250 is disposed between a check valve assembly 400 and the cartridge 200 so as to connect the check valve assembly 400 with the cartridge, and so detergent of the cartridge may be supplied to an inlet passage 700 or an outlet passage 800 through the check valve assembly 400.

The rib 260 is mounted at the both sides of the cartridge body 210 so as to function as a guide allowing the cartridge 200 to be inserted into the cartridge accommodator 110 easily, and further the rib 260 may allow the cartridge body 210 to be arranged slantly so that detergent is not contacted to the membrane 230 in a case that the cartridge is leaned.

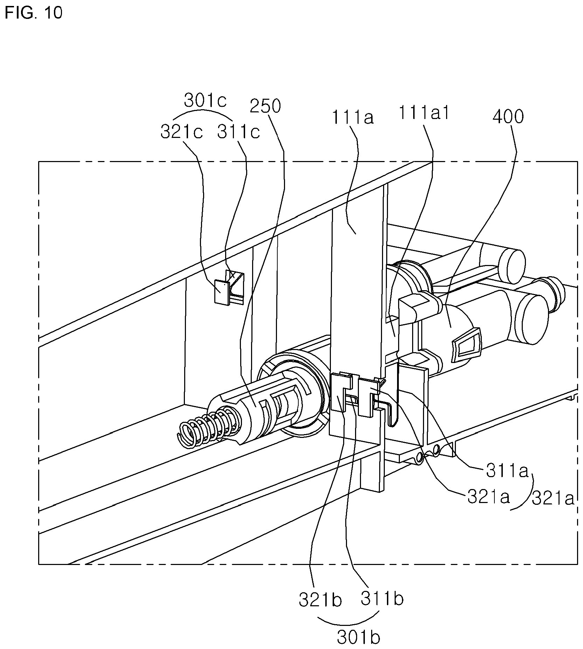

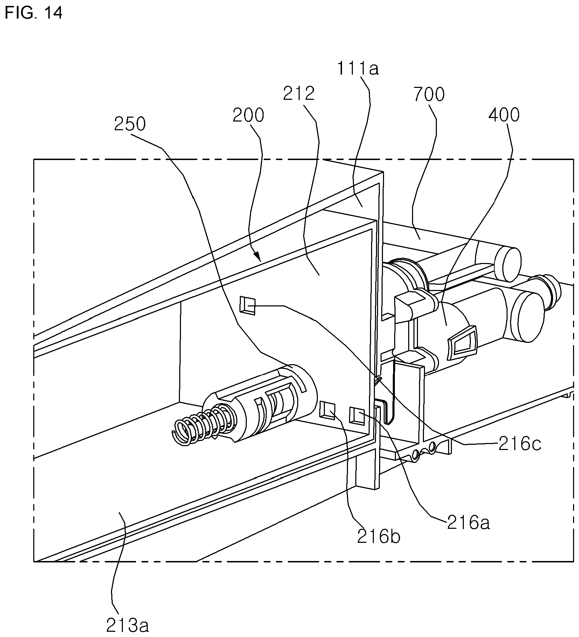

Hereinafter, referring to FIG. 4 through FIG. 8 and FIG. 10, and FIG. 4, especially FIG. 10 and FIG. 14, structure and operation of an electrode sensor 300 disposed at a rear side of the cartridge will be described.

An electrode sensor according to an exemplary embodiment of the present disclosure may include a terminal and an electrode plate . According to an exemplary embodiment of the present disclosure, electric sensors 300a, 300b, 300c, 300d, 300e, 300f are respectively disposed correspondingly to six cartridges 200, 200b, 200c, 200d, 200e, 200f, and each of the electric sensors may include a first electrode sensor, a second electrode sensor and a third electrode sensor so as to be corresponded to each of the cartridges.

The first electrode sensor may include a first terminal and a first electrode plate and the second electrode sensor may include a second terminal and a second electrode plate and the third electrode sensor may include a third terminal and a third electrode plate in the same manner.

Hereinafter, an electric sensor installed at one cartridge 200 of the six cartridges in which a plurality of the electrode sensors include electrode plate 321.

Specifically, the electrode sensor includes the first electrode sensor 301a, the second electrode sensor 301b and the third electrode sensor 301c.

The first electrode sensor 301a includes the first terminal 311a and the first electrode plate 321a.

The second electrode sensor 301b includes the second terminal 311b and the second electrode plate 321b.

The third electrode sensor 301c includes the third terminal 311c and the third electrode plate 321c.

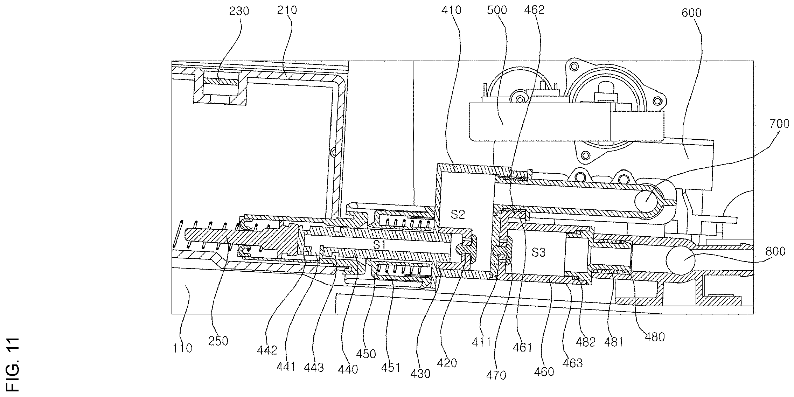

Hereinafter, referring to FIG. 5 through FIG. 8 and FIG 11, structure and operation of a check valve assembly 400 will be described.

A check valve 400 according to an exemplary embodiment of the present disclosure may include first check valve housings 410, a first check valve 420 installed at the first check valve housing 410, a check valve cap 430 for preventing detergent and air from leaking through the first check valve 420, a docking pipe 440a, 440 capable of moving detergent of the cartridge 200 toward the check valve in a state of being connected to the docking valve 250 of the cartridge 200, a docking pipe circumference 450, a second check valve housing 460, a second check valve 470 installed at the second check valve housings 460, and an outlet passage connecting pipe 480 connected to the outlet passage 800 in state of being connected to the second check valve housing 460.

A check valve o-ring 411 may be snugly inserted between the first check valve housing 410 and the second check valve housing 460 so as to connect the first check valve housing 410 to the second check valve housing 460 and function to provide airtight.

The first check valve 420 and the second check valve 470 according to an exemplary embodiment of the present disclosure may be formed as rubber. As the result of the foregoing, there is no need to employ spring as conventional manner because it is possible to block one-way flow of fluid by using elastic force of rubber, so it is possible to minimize a space of the housing, and further arrange various parts therein without any space loss.

The first check valve 420 and the second check valve 470 are disposed along the opposite direction to that of the cartridge 200. Thus, the first check valve 420 is capable of being opened only in a direction toward a second space S2, and the second check valve 470 is capable of being opened only in a direction toward a third space S3.

A detergent inlet 441 allowing detergent supplied from the cartridge 200 to inject to the docking valve are disposed at the docking pipe 440. A first docking pipe o-ring 442 and a second docking pipe o-ring 442 are snugly inserted to a first docking pipe o-ring grooves 442 and a second docking pipe o-ring groove 443 so as to prevent detergent from leaking to the outside while detergent is injected to the detergent inlet.

A docking pipe springs 451 are installed at the docking pipe circumference 450. The docking pipe spring 451 is capable of connecting fixedly the check valve assembly 400 to the docking valve 250 through an elastic force of the docking pipe spring, and further easily disassembling the cartridge 200 from the housing 110 through the elastic force of the docking pipe spring.

An inlet passage connector 461 connected to the inlet passage 700 and an outlet passage connector 463 connected to the outlet passage 800 are installed at the second check valve housing 460. The inlet passage connector 461 is snugly connected to the inlet passage 700 through the an inlet passage connector cover 462.

The outlet passage connecting pipe 480 is fixedly connected to an end of the outlet passage connector 463 by an outlet passage connecting o-ring 482. The outlet passage connecting pipe 480 is snugly connected to the outlet passage 800 by an outlet passage connecting cover 481.

A negative pressure and a positive pressure generated by a reciprocating movement of the piston 580 disposed at the pump 500 is delivered to the second space S2.

According to an exemplary embodiment of the present disclosure, a negative pressure generated by a reverse movement of the piston 580 is delivered to the second space S2 through the inlet passage 700. Thus, the first check valve 420 is opened by the negative pressure of the second space S2. Further, detergent had placed in the cartridge 200 is delivered by the negative pressure to the second space S2 through the first space S1 of the docking pipe 440a via the first check valve 420.

When detergent is delivered into the second space S2, a positive pressure generated by a forward movement of the piston 580 is delivered to the second space S2 through the inlet passage 700. Thus, the second check valve 470 is opened by a positive pressure of the second space S2, and the first check valve 420 is kept closed. And then, detergent had placed in the second space S2 is delivered to the third space S3 of the second check valve housing 460 by a positive pressure of the second space S2. Detergent supplied in the third space S3 is discharged to the outlet passage 800 by a positive pressure of the second space S2 and the third space S3 and is delivered to the tub 31 or the drawer 39 etc. with supplied water.

Hereinafter, a structure and an operation of a pump 500 according to an exemplary embodiment of the present disclosure will be described.

A pump 500 according to an exemplary embodiment of the present disclosure includes a housing 510 accommodating pump parts, a motor 520 generating power, a first gear 530 rotated by the motor 520, a second gear 540 rotating in a state of being engaged with the first gear 530, a third gear 550 rotating in a state of being engaged with the second gear 540, a crank gear rotating in a state of being engaged with the third gear 550, a connecting rod 570 connecting the crank gear 560 to the piston , a piston 580 delivering positive pressure or negative pressure to the passage switching valve 600 using by reciprocating movement, and a cylinder 590 defining a room for a space of the piston's reciprocating space.

The first gear 530 is engaged with the motor so as to be integrally rotated with the motor 520. The first gear 530 may be a helical gear. A helical gear has an advantage of reducing a noise generated in the motor 520 and transferring power easily. The second gear may be a worm gear. Since the pump 500 is installed between the inlet passage 700, the outlet passage 800 and the passage switching valve 600 etc., there is a need to assemble with high density for space efficiency. Therefore, according to an exemplary embodiment of the present disclosure, the motor 520 may be installed horizontally, and the second gear 540 may function as a worm gear so as to switch a direction of rotating power and deliver thereto.

The second gear 540 and the third gear 550 are integrally rotated. The crank gear 560 is rotated in a state of being engaged with the third gear 550. The crank gear 560 may have the greater number of teeth than that of the third gear 550 so as to deliver strong power thereto during reciprocating movement of the piston 580.

The crank gear 560 includes a crank shaft 561 functioning as a rotating axis of the crank gear, a crank arm 562 extended from the crank shaft, and a crank pin 563 connected to the connecting rod 570. The crank pin 563 and the connecting rod 570 are rotatably connected to each other so that the connecting rod 570 is capable of linearly moving along a direction of the cylinder 590 according to rotation of the crank pin 563 during rotation of the crank gear 560.

The connecting rod 570 is connected to the piston 580, and the piston 580 is snugly inserted to the cylinder 590 so as to move reciprocatively along a longitudinal direction of the cylinder 590. At this time, positive pressure or negative pressure may be delivered to the passage switching valve 600 connected to the cylinder 590 through a linear movement of the piston 580. When the piston 580 is moved toward the passage switching valve 600, positive pressure is delivered to the passage switching valve 600, and on the other hand, when the piston 580 is moved along the opposite direction of the passage switching valve 600, negative pressure is delivered to the passage switching valve 600.

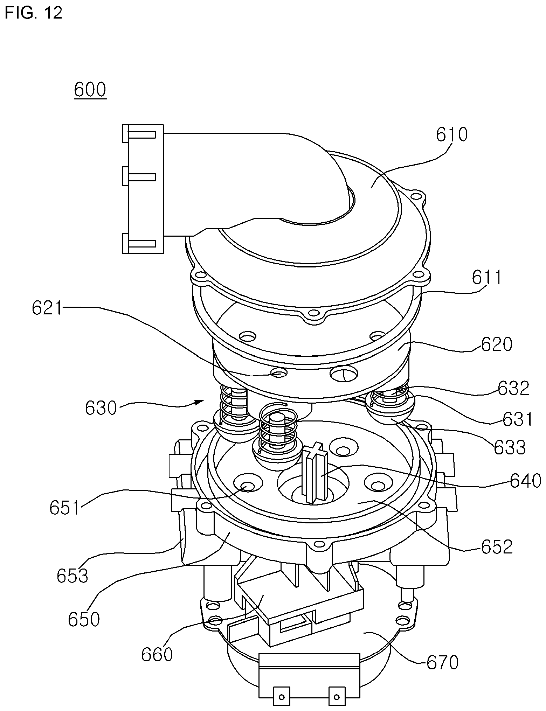

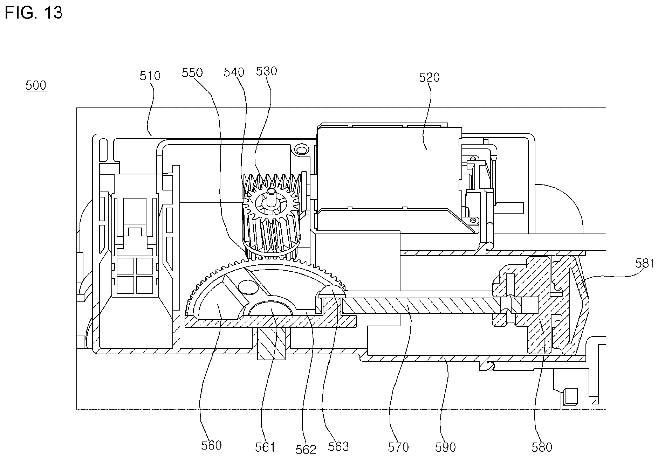

Hereinafter, referring to FIG. 5 through FIG. 8 and FIG. 12 through FIG. 13, a structure of a passage switching valve 600 will be described.

A passage switching valve 600 according to an exemplary embodiment of the present disclosure includes an upper housing 610 connected to the cylinder 590 of the pump 500, a lower housing 650 connected to the upper housing 610, a disc 620 rotatably disposed in the housing 610, a spring valve 630 disposed at the disc 620, a shaft 640 rotating the disc 620, a micro switch 660 disposed at a lower side of the lower housing 650 and a passage switching motor 670 rotating the shaft 640.

A passage connecting opening 651 respectively connected to inlet passages 700a, 700b, 700c, 700d, 700e, 700f are disposed at the lower housing 650 so that fluid that has passed through a disc hole 621 of the disc 620 may pass through the passage connecting opening 651. And then the fluid is supplied to each inlet passage 700 connected thereto via the passage outlet opening 653.

The spring valve 630 is installed at the disc hole 621 of the disc 620. The spring valve 630 includes a spring 631 providing an elastic force, a spring shaft 632 preventing the spring 631 from being separated, and a cover unit 633 covering the passage connecting opening 651 with an elastic force of the spring 631.

Hereinafter, referring to FIG. 5 through FIG. 8 and FIG. 12 through FIG. 13, an operation of a passage switching valve 600 will be described in detail.

When detergent is selected for being supplied, the passage switching motor 670 is operated by electric power supplied. The operated passage switching motor 670 functions to rotate the shaft 640 connected thereto and also the disc 620 connected to the shaft 640.

At this time, the spring valve 630 installed at the disc 620 is also integrally rotated corresponding to a rotation of the disc 620, and when the passage connecting opening 651 of the lower housing 650 is positioned at a rotary position of the spring valve 630, the cover unit 633 functions to block the passage connecting opening 651 by using an elastic force of the spring 631.

The controller 3 may control a rotary angle of the disc 620 so as to prevent the spring valve 630 from positioning at the passage connecting opening 651 connected to the check valve assembly 400, and so as to connect the check valve assembly 400 connected with cartridge accommodating detergent for supply to the pump 500.

When the spring valve 630 is not placed at the passage connecting opening 651, the pump 500 and the passage connecting opening 651 are opened and positive or negative pressure generated in the pump 500 is sequentially delivered to the inlet passage 700 and the check valve assembly 400 through the passage connecting opening 651 so as to supply detergent of the cartridge 200 to the outlet passage 800.

While the controller 3 controls a rotary angle of the disc 620, the spring valve 630 is placed at the passage connecting opening 651a connected to the check valve assembly 400 and the cover unit 633 functions to block the passage connecting opening 651a with an elastic force of the spring 631 so as to cut off the flow between the check valve assembly 400 connected to cartridge having no need to be supplied and the pump 500.

When the spring valve 630 is placed at the passage connecting opening 651, the flow of the pump 500 through the passage connecting opening 651 is cut off, and positive pressure or negative pressure generated in the pump 500 is not moved to the check valve assembly 400, so detergent in the cartridge 200 is not moved.

It is required to detect a rotary angle of the disc 620 with the micro switch 660 to put the disc 620 on a desired rotary angle so as to precisely control the rotary angle of the disc 620.

While the spring valve 630 of the disc 620 is not placed on a position of the passage connecting opening 651, the spring valve 630 is placed on an upper surface 652 of the lower housing 650. And when the spring valve 630 is placed on a position of the passage connecting opening 651 by rotation of the disc 620, the spring valve 630 is extended so as to block the passage connecting opening 651.

A plurality of passage connecting openings 651 is capable of being opened so that a plurality of detergent is supplied. And, a plurality of spring valves 630 may be provided so as to block the plurality of passage connecting openings 651.

Hereinafter, referring to FIG. 5 through FIG. 8, an inlet passage 700 and an outlet passage 800 will be described in detail.

According to an exemplary embodiment of the present disclosure, the inlet passage 700 is connected to the inlet passage connector 461 of the check valve assembly 400, and further the inlet passage 700 is connected to the passage outlet openings 653 of the passage switching valve 600 so as to deliver fluid delivered by the pump 500 to the check valve assembly 400.

A plurality of inlet passages 700a, 700b, 700c, 700d, 700e, 700f are respectively connected to each of the plurality of inlet passage connectors 461 and each of the plurality of passage outlet openings 653.

According to an exemplary embodiment of the present disclosure, there may be the passage switching valve 600 disposed at a center thereof, three cartridges 200 disposed at both sides thereof and a check valve assembly 400 connected to the three cartridge 200.

The inlet passages 700a, 700b, 700c disposed at the left side thereof is respectively connected to the inlet passage connector 461 of the left check valve assemblies 400, 400b, 400c and the passage outlet opening 653 disposed adjacently at a left side of the passage switching valve 600.

The inlet passages 700d, 700e, 700f disposed at the right side thereof is respectively connected to the inlet passage connectors 461d, 461e, 461f of the right check valve assemblies 400d, 400e, 400f and the passage outlet openings 653d, 653e, 653f disposed adjacently at a left side of the passage switching valve 600.

The inlet passages 700a, 700b, 700c disposed at a left side thereof through a first inlet passage plate 710 and the inlet passages 700d, 700e, 700f disposed at a right side thereof through a second inlet passage plate 720 are integrally disposed so as to fix the inlet passages, and fluid is stably supplied.

According to an exemplary embodiment of the present disclosure, an outlet passage 800 is connected to an outlet passage connecting pipe 480a of the check valve assembly 400, and the outlet passage 800 functions to supply detergent supplied from the outlet passage connecting pipe 481a to the tub 31 or the drawer 39 through a provider 820.

A water supply valve 830 is disposed at an end of the outlet passage 800 so as to supply water supplied from the outdoor water source to the outlet passage 800, and then water supplied from the water supply valve 830 is delivered to the outlet passage 800 via a water supply hose 840.

After water is supplied through check valve connectors 850a, 850b, 850c, 850d, 850e, 850f connected to the outlet passage connecting pipe 481 of the check valve assembly 400, the water is discharged to the provider 820 with detergent supplied to the outlet passage 800 while the water is moved toward the provider 820 disposed at the other end of the outlet passage 800.

The check valve connector 850 is connected to a lateral surface of the outlet passage 800. Each of the check valve connector 850 is connected to each of the outlet passage connector 480, so detergent discharged from the outlet passage connector 480 is delivered to the outlet passage 800 through the check valve connector 850.

According to an exemplary embodiment of the present disclosure, the outlet passage 800 is installed such as being divided into a left outlet passage 800a and a right outlet passage 800b with respect to the passage switching valve 600, and a connecting hose 810 is installed between the left outlet passage 800a and the right outlet passage 800b so as to connect the left outlet passage 800a with the right outlet passage 800b. Herein, the connecting hose 810 takes the form of channelshape so as to make a space for installing the passage switching valve 600, and further to prevent the outlet passage 800 from intervening the passage switching valve 600.

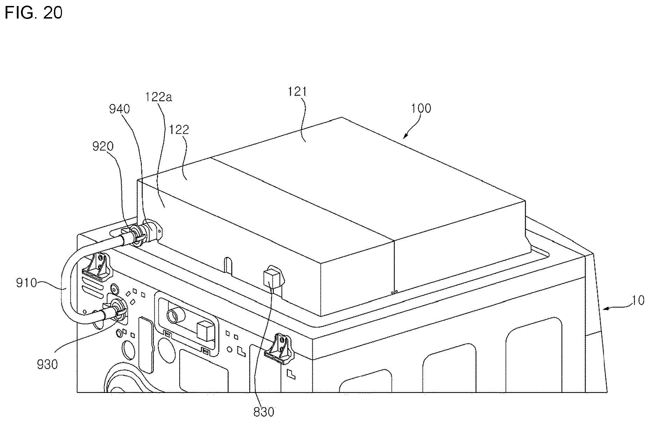

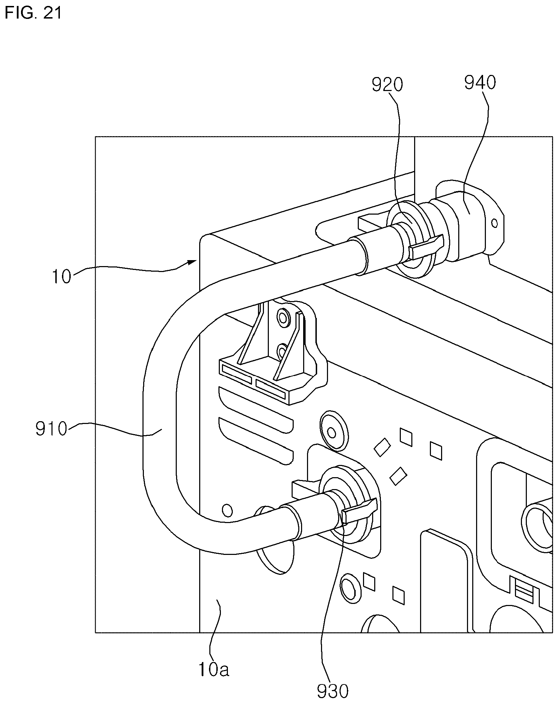

Hereinafter, referring to FIG. 20 and FIG. 21, a passage connector 900 according to an exemplary embodiment of the present disclosure will be described.

A passage connector 900 includes a connecting hose 910 connecting the cabinet 10 with the detergent supply device 100, a first head 920 installed at an end of the connecting hose 910 in which the first head 920 is connected to the detergent supply device 100, a second head 930 installed at the other end of the connecting hose 910 in which the second head 930 is connected to the cabinet 10, a first connector 940 connecting the first head with the detergent supply device 100, a second connector 950 connecting the second head 930 with the cabinet 10, a connecting body 960 disposed so as to encompass the connecting hose 910, and a body opening 970 disposed at a center of the connecting body 960.

The passage connector 900 functions to deliver detergent supplied from the outlet passage 800 of the detergent supply device 100 to drawer 39 in the cabinet 10 or tub 31.

A cover 120 of the detergent supply device 100 includes a first cover 121 covering a front side of the cartridge 200 and a second cover 122 covering a rear side of main parts except for the cartridge. The first cover 121 and the second cover 122 may encompass all the surface of the detergent supply device 100.

The first connector 940 is installed at a rear surface of the second cover 122. The first connector 940 includes a head connector 941 connected to the first head 920, a head mount 942 mounted to the first head 920, a supporter 943 fixing the first connector 940 to a rear surface of the second cover and a supply connector 944 connecting the first connector 940 with the outlet passage 800.

The head connector 941 is inserted inside a space in which the first head 920 defines, so that detergent and water discharged from the head connector 941 are delivered to the connecting hose 910 through the first head 920.

A ball 921 is installed at an inner circumference of the first head 920, and the first head 920 is mounted at the head connector 942 of the first connector 940 when the first head 920 is inserted to the first connector 940. Thus, the ball 922 and the head connector 942 are fixedly connected to each other so that the first head 920 and the first connector 940 are not separated from each other while fluid is discharged to the connecting hose 910.

The supporter 943 takes the form of plate in which the supporter 943 is disposed perpendicular to a longitudinal direction of the first head 920 at a center of the first head 920. The plate-shaped supporter 943 is contactly mounted at a rear surface of the second cover 122. The supporter 943 functions to secure the first connector 940 so as to prevent the first connector 940 from being swayed by oil pressure. According to an exemplary embodiment of the present disclosure, a hole is be formed at the supporter 943 so that the supporter 943 can be bolted to a rear surface of the cover, but is not limited thereto.

The supply connector 944 is connected to the supplying pipe of the outlet passage 800 so that water blended with detergent in which the water discharged from the outlet passage 800 is delivered to the connecting hose 910.

The second connector 950 is installed at a rear surface 10a of the cabinet 10. The second connector 950 includes a head connector 951 insertly connected to the second head 930, a head connector 952 connected to the second head 930, a supporter 953 securing the second connector 950 to a rear surface 10a of the cabinet and an inlet connector 944 connecting the second connector 950 with the tub 31 or the drawer 39.

The head connector 951 is inserted to inside a space where the second head 930 is penetrating, and then the head connector 951 delivers detergent and water supplied from the connecting hose 910 and the second head 930 to the tub 31 of the cabinet or the drawer 39.

A ball 931 is installed at an inner circumference of the second head 930 in which the ball is mounted to the head connector 952 of the first connector 950, when the second head 930 is inserted to the second connector 950. Thus, the ball 931 and the head connector 952 are fixedly connected to each other so as to prevent the second head and the second connector from being separated from each other by oil pressure while fluid is discharged to the tub 31 of cabinet or the drawer 39.

The supporter 953 takes the form of plate in which the supporter 953 is disposed perpendicular to a longitudinal direction of the first head 930 at a center of the second head 930. The plate-shaped supporter 953 is contactly mounted to a rear surface 10a of the cabinet so as to prevent the second connector 950 from being swayed by oil pressure. According to an exemplary embodiment of the present disclosure, a hook is disposed at the supporter 953 so as to be connected to a rear side of the cabinet, but is not limited thereto.

The inlet connector 954 may be connected to the tub 31 or drawer 39. In a case that the inlet connector 954 is connected to the tub 31 detergent had passed through the inlet passage 954 may be directly delivered to the tub 31. Meanwhile, in a case that the inlet connector 954 is connected to the drawer 39 detergent had passed through the inlet connector 954 may be delivered to the tub 31 through the drawer 39.

The first head 920 and the second head 930 are disposed respectively detachably to the first connector 940 and the second connector 950. Thus, when the detergent supply device 100 is not in use, the first head 920 and the second head 930 are separated from the first connector 940 and the second connector 950, and then the passage connector 900 is separated from the cabinet 10 and the detergent supply device 100. In other hands, when the detergent supply device 100 is in use, the first head 920 and the second head 930 are connected to the first connector 940 and the second connector 950, and then the passage connector 900 is connected to the cabinet 10 and the detergent supply device 100, so detergent of the detergent supply device 100 is capable of being delivered to the tub 31 in the cabinet 10.

The first connector 940 is installed at a rear surface of the second cover 122 and the second connector 950 is installed at a rear surface of the cabinet 10, and further the passage connector 900 is installed at a rear side of the cabinet 10. That is, the passage connector 900 is installed at an invisible position to a user, so it is possible to provide natural appearance between the passage connector 900 and the other parts.

Referring to the attached drawings according to the other exemplary embodiment of the present disclosure, there may be further included a connecting body 960 disposed so as to encompass the connecting hose 910. The connecting body 960 is made of hard material, while the connecting hose 910 is made of soft material. Therefore, a user can easily assemble or disassemble the passage connector 900 with grabbing a body opening 970 of the connecting body 960 when a user has the intend of assembling or disassembling the passage connector 900.

To supply detergent accommodated in the cabinet to a main washing machine through the detergent supply device, it is required to determine if the main washing machine is connected with the detergent supply device, and in doing so, after information about a laundry that had indentified in the main washing machine is transmitted to the detergent supply device, appropriate detergent is supplied to the laundry.

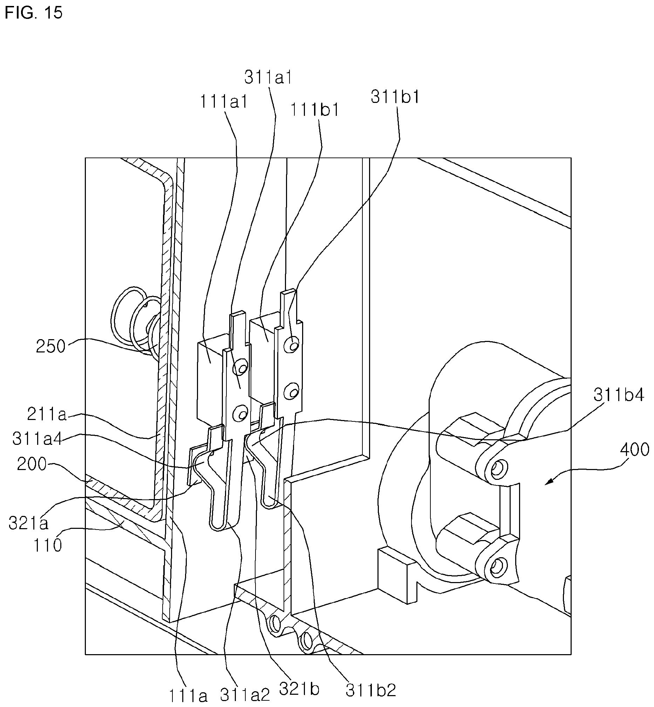

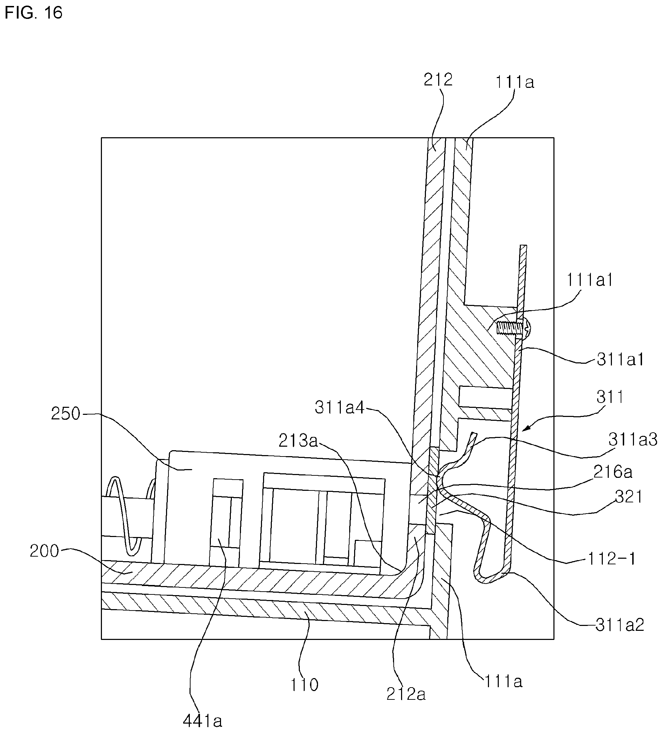

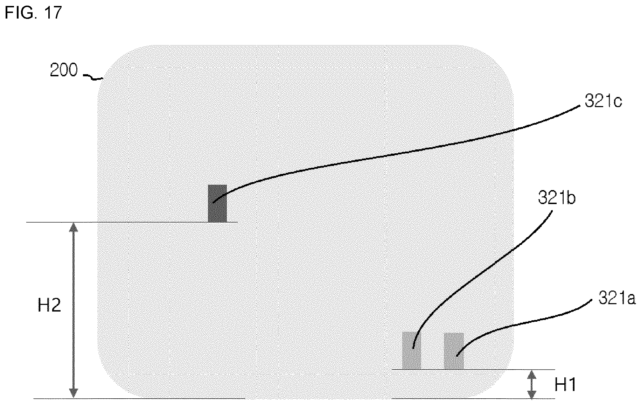

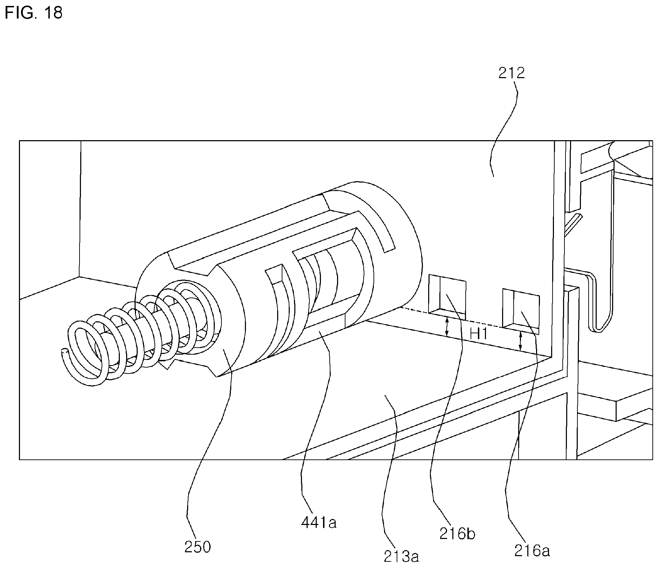

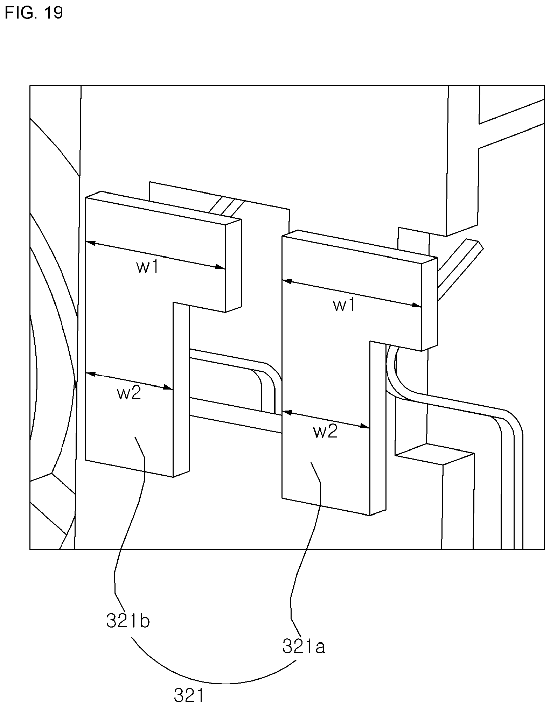

Hereinafter, referring to FIG. 10 and FIG. 14 through FIG. 19, structure of an electrode sensor and a terminal according to an exemplary embodiment of the present disclosure will be described.

The electrode sensors 301a, 301b, 301c are installed at a connecting wall 111a formed at the housing 110 into which cartridge 200 is inserted. The electrode plates 321a, 321b, 321c are installed between the cartridge connecting wall 111a and the cartridge rear wall 212, and the terminals 311a, 311b, 311c are installed at protrusions 111a1, 111b1 protruding toward an opposite direction from the cartridge at the cartridge connecting wall 111a. For instance, the terminal 311a includes connecting portion 311a1 mounted to the protusion 111a1 of the connecting wall 11a of the housing 110, a first curved portion 311a2 bending for from the connecting portion, and a second curved portion 311a3 bending upward and then forward from the first curved portion 311a2, wherein the second curved portion has a protruding portion 311a4 toward the electrode plate 321.

The connecting portion 311a1 is formed as being plate-shaped and is mounted to the protrusion 111a1. According to an exemplary embodiment of the present disclosure, the connecting portion 311a1 is bolted, but is not limited thereto. Rather, the connecting portion 311a1 may be mounted thereto in any other manners. The first curved portion 311a2 is spaced apart from the protruding portion 311a4 of the second curved portion 311a3, and the first curved portion 311a2 provides an elastic force so that the protruding portion 311a4 of the second curved portion 311a3 keeps in contact with the electrode plate 321. Repulsive force against a deformation of the first curved portion 311a2 elastically acts on the second curved portion 311a3 so that the second curved portion 311a3 keeps in contact with the electrode plate 321.

As can be seen from the foregoing, the protruding portion 311a4 of the second curved portion 311a3 pushes the electrode plate 321 toward the cartridge and simultaneously is contacted to the electrode plate 321. Specifically, a connecting wall opening 112-1 is formed at the cartridge connecting wall 111a, and the protruding portion 311a4 contacts to the electrode plate 321 rough the connecting wall opening 112-1. In doing so, the terminal 311 can receive an electric signal from the electrode plate 321. The electric signal received in the terminal 311 may transrait to the controller 3 through an electric wire.

An opening 216a, 216b, 216c is formed and functions as a passage connecting an inside of the cartridge with the electrode plate. Therefore, when detergent is filling at any height in the cartridge, detergent can be contacted to the electrode plate 321 through the opening, so the electrode plate is electrified by the contacted detergent.

The electrode plate 321 is snugly contacted to the cartridge rear wall 212a so that detergent in the cartridge is not leaked through a clearance between the electrode plate 321 and the cartridge rear wall 212a. As a result of the forgoing, the electrode plate 321 is disposed between the connecting wall 111a and the cartridge rear wall 212a, and is secured by the protruding portion 311a4 to the cartridge rear wall 212a which is placed at a front side of the electrode plate 321 and the connecting wall 111a is placed at a rear side of the electrode plate 321.

The terminal 216a1 is disposed at a lower end of the electrode plate 321. The protruding portion 311a4 is contacted to an upper side of the electrode plate 321. Thus, detergent is contacted to the lower end of the electrode plate 321 through the terminal 216a1, and an electric current is received through the protruding portion 311a4 connected to an upper side of the electrode plate.

A width of a lower end of the electrode plate 321 is smaller than an upper end of the electrode plate 321. Because the upper end of the electrode plate has a greater width, it is possible to easily contact to the protruding portion. Because a lower end of the electrode plate has the smaller width, comparably small amount of detergent may be contacted thereto. Therefore, it is possible to reduce a chance that detergent would contact to the electrode plate or detergent would be hardened on the electrode plate so as to cause a misjudgement of detecting amount of detergent. Further, because the electrode plate has the smaller lower end where detergent would contact, adjoining electrode plates are spaced apart from each other, so it is possible to reduce a chance of an intervening between adjoining electrode plates. According to an exemplary embodiment of the present disclosure, the electrode plate 321 may have a smaller width W2 at a lower end than an upper width W1 in which the lower end of the electrode plate 321 is formed as being L-shaped, but is not limited thereto. Therefore, detergent is hardly contacted to the lower end of the electrode plate, and it is preferable that electrode plate is formed as a shape capable of reducing an interference therebetween.

The 216a, 216b is formed with spaced apart from a lower surface 213a of the cartridge. Specifically, the terminal 216a, 216b must be installed at a higher position than the detergent inlet 441a placed at the docking valve 250 which is mounted to a lower side of the cartridge rear wall 212a and is connecting the pump 500 with the cartridge 200. This is because it is required to detect a residual amount of detergent before a cartridge is completely out of detergent, and it is required to let a user know the residual amount of detergent. Therefore, because it is no use to detect a residual amount of detergent before detergent is supplied to the pump 500 through the detergent inlet 441a, the terminal 216a must be placed at a higher than the detergent inlet 441a.

At least two of a plurality of the electrode sensors have a different height each other. A conventional a pair of electrode sensors detect a residual amount of detergent in such a state that the pair of electrode sensors are installed adjacently to each other with the same height. Like that, when only two electrode sensors are installed per cartridge, there may be a problem that it is difficult to precisely detect a residual amount of detergent, because cartridge is swayed or detergent is hardened on an electrode sensor even though detergent is not filling at an adequate height.

The second two electrode sensors comprise two electrode sensors of which at least one electrode sensor is placed higher than the first two electrode sensors.

Thus, a first two electrode sensors and a second two electrode sensors are included. The first two electrode sensors comprise the first electrode sensor 301a and the second electrode sensor 301b, wherein the first and the second electrode sensors may be positioned at same height H1, According to an exemplary embodiment of the present disclosure, there may be provided with three electrode sensors . The first two electrode sensors may detect a first sensor value, and the second two electrode sensors may detect a second sensor value. That is, it is possible to increase an accuracy of detecting residual amount of detergent, and also to determine a malfunction thereof or unmount, etc. by the first sensor value and the second sensor value.

The electrical sensor 300 outputs an electric signal when positive and negative electrode sensors spaced apart from each other are electrified through a medium. That is, detergent contained in the cartridge functions as the medium so as to generate an electric current or an electric voltage at the electrode sensors., and amount of detergent in the cartridge is detected by the terminal.

One of the first two electrode sensors is formed as a receiver and the other is formed as a transmitter, and in the same manner in case of the second two electrode sensors. The second two electrode sensor may include one of the first two electrode sensors and a third electrode sensor disposed higher than the first and second electrode sensors.

One of the first two electrode sensors included in the second electrode sensors is formed as a receiver, and the third electrode sensor is formed as a transmitter, and vice versa.

Hereinafter, referring to FIG. 10 and FIG. 14 through FIG. 19, a structure of an electrode sensor and a terminal according to an exemplary embodiment of the present disclosure will be described.

According to an exemplary embodiment of the present disclosure, the terminal and the electrode plate is included in each electrode sensor. The first terminal 311a, the first electrode plate 321a the second terminal 311b, and the second electrode plate 321b are disposed at a lower position and at a side of docking valve.

The third terminal 311c and the third electrode plate 321c are disposed at higher position and at the other side of the docking valve 250.

The first and second electrode plates 321a, 321b are installed parallel to a height H1 at a rear surface of a cartridge. The third electrode plate 321c is installed at a higher position H2 than a position H1 at a rear surface of a cartridge. First and second openings 216a, 216a having a first height H1 from a bottom surface of the cartridge and a third opening 216a having a second height H2 from the bottom surface of the cartridge are respectively disposed a cartridge rear wall 212a corresponding to a position where the first, second and third electrode plates 321a, 321b, 321c are installed. The first, second and third electrode plates 321a, 321b, 321c are respectively snugly installed at a position corresponding to a position where the first, second and third openings 216a, 216a, 216a are disposed. In doing so, the first, second and third electrode plates 321a, 321b, 321c are exposed to an inside of the cartridge so as to contact to detergent in the cartridge, so an electric current and a voltage may be generated in the electrode plates.

The first, second and third openings 216a, 216a, 216a are respectively placed to be open to a lower ends of the first, second and third electrode plates so that each of the lower ends thereof is contacted to detergent, wherein each of the lower ends of the first, second and third electrode plates has smaller width than the upper ends thereof.

The first and second openings 216a, 216a are spaced apart from a lower surface of the cartridge 213 by a height of H1, so as to detect a residual amount of detergent.

The first and second electrode plates 321a, 321b are formed as being L-shaped respectively. That is, each width of lower ends of the first and second electrode plates are formed smaller than that of each upper end thereof. Because each upper end of the first and second electrode plates has a large width W1, it is possible to easily contact to the protruding portion 311a4 of the terminal 311a. Further, because each lower end of the first and second electrode plates has a small width W2, it is possible to reduce a problem caused by being contacted with detergent, and furthermore to reduce a chance to a misjudgement and interference therebetween.

Specifically, with respect to each width of lower ends of the first and second electrode plates 321a, 321b, comparably a small amount of detergent may be contacted thereto so as to reduce a chance that detergent is contacted. Therefore, it is possible to reduce a chance that detergent would contact to the electrode plate or detergent would be hardened on the electrode plate so as to cause a misjudgement of detecting amount of detergent. Herein, because the two electrode plates are closely spaced apart from each other with being parallel at the same height, there is a chance that an interference between the two electrode plates is occurred. So, it is required to employ an electrode plate having a lower end of smaller width in which the lower end is electrified so as to prevent an interference therebetween.

Because a height of the third electrode plate 321c is different from that of the first and second electrode plates 321a, 321b, and the third electrode plate 321c is spaced apart far from the first and second electrode plates 321a, 321b, there is no need to form the third electrode plate 321c as being L-shaped.

Although the embodiments of the present disclosure are described above with reference to the accompanying drawings, the present disclosure is not limited to the above embodiments, and may be manufactured in various forms, and in the art to which the present disclosure belongs, those skilled in the art will appreciate that the present disclosure may be embodied in other specific forms without departing from the scope of the appended claims. Therefore, it should be understood that the embodiments described above are exemplary in all respects and not restrictive.

## Claims

1. A washing machine comprising:
a cabinet (10);
a tub (31) disposed in the cabinet to receive water;
a drum (32) rotatably disposed in the tub to contain a laundry; and
a detergent supply device (100) disposed at the cabinet to supply detergent into the tub;
wherein the detergent supply device (100) comprises:
a plurality of cartridges (200) containing detergent;
a pump (500) for suctioning detergent from the plurality of cartridges;
a passage (700, 800) guiding detergent discharged from the pump into the tub; and
a plurality of electrode sensors (301a, 301b, 301c) disposed at a side of the plurality of cartridges;
wherein each of the plurality of electrode sensors (301a, 301b, 301c) comprises:
an electrode plate (321a, 321b, 321c) configured for detecting electric signal; and
a terminal (311a, 311b, 311c) for transmitting the electric signal detected by the electrode plate,
wherein the electrode plate (321a, 321b, 321c) has a first surface contacted with detergent contained in the cartridge and a second surface connected to the terminal,
**characterized in that** the electrode plate (321a, 321b, 321c) is disposed to have, in its upright position, a smaller width (w2) at a lower end thereof than at an upper end thereof,
wherein an opening (216a, 216b, 216c) is formed at a rear wall (212a) of the cartridge, and the electrode plate (321a, 321b, 321c) is disposed to be in contact with the rear wall (212a) of the cartridge so that the first surface thereof is exposed inside the cartridge through the opening, and
wherein the opening (216a, 216b, 216c) is in contact with the lower end of the electrode plate.

2. The washing machine of claim 1, wherein the opening (216a, 216b, 216c) is distanced from a lower surface (213a) of the cartridge (200).

3. The washing machine of claim 2, wherein the detergent supply device (100) further comprises a docking valve (250) disposed at a lower side of the rear wall of the cartridge, the docking valve (250) connecting the pump (500) and the cartridge (200), wherein the docking valve (250) is provided with a detergent inlet (211) through which detergent in the cartridge is sucked into the pump, and the opening (216a, 216b, 216c) is disposed at a position higher than the detergent inlet.

4. The washing machine of any one of the preceding claims, wherein the detergent supply device (100) further comprises a housing (110) for accommodating the cartridge (200), and
wherein the terminal (311a, 311b, 311c) comprises:
a connecting portion (311a1) connected to the housing;
a first curved portion (311a2) bending from the connecting portion; and
a second curved portion (311a3) bending from the first curved portion and extending upward, wherein the second curved portion includes a protruding portion (311a4) contacting the electrode plate (321a, 321b, 321c).

5. The washing machine of claims 4, wherein the housing (110) has a connecting wall (111) disposed to the rear of the cartridge (200), wherein the electrode plate is disposed between the connecting wall (111) of the housing and the cartridge rear wall (212a) of the cartridge.

6. The washing machine of claim 5, wherein the connecting portion (311a1) of the terminal is connected to the connecting wall (111), preferably to a protrusion (111a1) protruded from the connecting wall (111) in an opposite direction from the cartridge.

7. The washing machine of claim 6, wherein the connecting wall (111) has a connecting wall opening (112-1) formed thereon, and the electrode plate (321a, 321b, 321c) contacts the protruding portion (311a4) through the connecting wall opening (112-1).

8. The washing machine of any one of the preceding claims, the electrode plate has a shape of 'L'.

9. The washing machine of any one of the preceding claims, wherein the plurality of electrode sensors (301a, 301b, 301c) comprises at least two disposed at different heights.

10. The washing machine of any one of the preceding claims, wherein, among the plurality of electrode sensors (301a, 301b, 301c), three are disposed at a side of one of the plurality of cartridges (200), wherein electrode plates of the three electrode sensors comprise a first and a second electrode plates (321a, 321b) positioned at a first height (H1) and a third electrode plate (321c) positioned at a second height (H2) higher than the first height.

11. The washing machine of any one of the preceding claims, wherein the electric signal is an electric current or an electric voltage generated between electrode plates of two of the plurality of electrode sensors that are disposed at a side of one of the plurality of cartridges (200).

## Patentansprüche

1. Waschmaschine, die aufweist:
ein Gehäuse (10);
einen Bottich (31), der in dem Kabinett angeordnet ist, um Wasser aufzunehmen;
eine Trommel (32), die im Bottich drehbar angeordnet ist, um Wäsche zu enthalten; und
eine Waschmittel-Zufuhrvorrichtung (100), die an dem Kabinett angeordnet ist, um Waschmittel in den Bottich zuzuführen;
wobei die Waschmittel-Zufuhrvorrichtung (100) aufweist:
mehrere Kartuschen (200), die Waschmittel enthalten;
eine Pumpe (500) zum Ansaugen von Waschmittel aus den mehreren Kartuschen;
einen Kanal (700, 800), der Waschmittel führt, das von der Pumpe in den Bottich abgegeben wird; und
mehrere Elektrodensensoren (301a, 301b, 301c), die an einer Seite der mehreren Kartuschen angeordnet sind;
wobei jeder der mehreren Elektrodensensoren (301a, 301b, 301c) aufweist:
eine Elektrodenplatte (321a, 321b, 321c), die zum Detektieren eines elektrischen Signals konfiguriert ist; und
einen Anschluss (311a, 311b, 311c) zum Übertragen des durch die Elektrodenplatte detektierten elektrischen Signals,
wobei die Elektrodenplatte (321a, 321b, 321c) eine das in der Kartusche enthaltene Waschmittel kontaktierende erste Oberfläche und eine mit dem Anschluss verbundene zweite Oberfläche hat,
**dadurch gekennzeichnet, dass** die Elektrodenplatte (321a, 321b, 321c) so angeordnet ist, dass sie in ihrer aufrechten Position eine kleinere Breite (w2) an einem unteren Ende davon als an einem oberen Ende davon hat,
wobei eine Öffnung (216a, 216b, 216c) an einer Rückwand (212a) der Kartusche ausgebildet ist und die Elektrodenplatte (321a, 321b, 321c) so angeordnet ist, dass sie in Kontakt mit der Rückwand (212a) der Kartusche steht, so dass ihre erste Oberfläche innerhalb der Kartusche durch die Öffnung hindurch freiliegt, und
wobei die Öffnung (216a, 216b, 216c) in Kontakt mit dem unteren Ende der Elektrodenplatte steht.

2. Waschmaschine nach Anspruch 1, wobei die Öffnung (216a, 216b, 216c) von einer unteren Fläche (213a) der Kartusche (200) beabstandet ist.

3. Waschmaschine nach Anspruch 2, wobei die Waschmittel-Zufuhrvorrichtung (100) ferner ein Andockventil (250) aufweist, das an einer Unterseite der Rückwand der Kartusche angeordnet ist, wobei das Andockventil (250), die Pumpe (500) und die Kartusche (200) verbindet, wobei das Andockventil (250) mit einem Waschmitteleinlass (211) versehen ist, über den Waschmittel in der Kartusche in die Pumpe angesaugt wird, und die Öffnung (216a, 216b, 216c) an einer höheren Position als der Waschmitteleinlass angeordnet ist.

4. Waschmaschine nach einem der vorstehenden Ansprüche, wobei die Waschmittel-Zufuhrvorrichtung (100) ferner ein Gehäuse (110) zum Unterbringen der Kartusche (200) aufweist und
wobei der Anschluss (311a, 311b, 311c) aufweist:
einen Verbindungsabschnitt (311a1), der mit dem Gehäuse verbunden ist;
einen ersten gekrümmten Abschnitt (311a2), der vom Verbindungsabschnitt abbiegt; und
einen zweiten gekrümmten Abschnitt (311a3), der vom ersten gekrümmten Abschnitt abbiegt und sich nach oben erstreckt, wobei der zweite gekrümmte Abschnitt einen Vorsprungabschnitt (311a4) aufweist, der die Elektrodenplatte (321a, 321b, 321c) kontaktiert.

5. Waschmaschine nach Anspruch 4, wobei das Gehäuse (110) eine Verbindungswand (111) hat, die hinter der Kartusche (200) angeordnet ist, wobei die Elektrodenplatte zwischen der Verbindungswand (111) des Gehäuses und der Kartuschen-Rückwand (212a) der Kartusche angeordnet ist.

6. Waschmaschine nach Anspruch 5, wobei der Verbindungsabschnitt (311a1) des Anschlusses mit der Verbindungswand (111) verbunden ist, vorzugsweise mit einem Vorsprung (111a1), der von der Verbindungswand (111) in Gegenrichtung zur Kartusche vorsteht.

7. Waschmaschine nach Anspruch 6, wobei die Verbindungswand (111) eine darauf gebildete Verbindungswandöffnung (112-1) hat und die Elektrodenplatte (321a, 321b, 321c) den Vorsprungabschnitt (311a4) durch die Verbindungswandöffnung (112-1) hindurch kontaktiert.

8. Waschmaschine nach einem der vorstehenden Ansprüche, wobei die Elektrodenplatte eine "L"-Form hat.

9. Waschmaschine nach einem der vorstehenden Ansprüche, wobei die mehreren Elektrodensensoren (301a, 301b, 301c) mindestens zwei in unterschiedlichen Höhen angeordnete aufweisen.

10. Waschmaschine nach einem der vorstehenden Ansprüche, wobei unter den mehreren Elektrodensensoren (301a, 301b, 301c) drei an einer Seite einer der mehreren Kartuschen (200) angeordnet sind, wobei Elektrodenplatten der drei Elektrodensensoren eine erste und eine zweite Elektrodenplatte (321a, 321b), die in einer ersten Höhe (H1) positioniert sind, und eine dritte Elektrodenplatte (321c) aufweisen, die in einer zweiten Höhe (H2) positioniert ist, die höher als die erste Höhe ist.

11. Waschmaschine nach einem der vorstehenden Ansprüche, wobei das elektrische Signal ein elektrischer Strom oder eine elektrische Spannung ist, der bzw. die zwischen Elektrodenplatten zweier der mehreren Elektrodensensoren erzeugt wird, die an einer Seite einer der mehreren Kartuschen (200) angeordnet sind.

## Revendications

1. Lave-linge comprenant :
une enceinte (10) ;
une cuve (31) disposée dans l'enceinte afin de recevoir de l'eau ;
un tambour (32) disposé de manière rotative dans la cuve afin de contenir du linge ; et
un dispositif d'alimentation en détergent (100) disposé au niveau de l'enceinte afin de fournir du détergent à la cuve ;
dans lequel le dispositif d'alimentation en détergent (100) comprend :
une pluralité de cartouches (200) qui contiennent du détergent ;
une pompe (500) destinée à aspirer le détergent depuis la pluralité de cartouches ;
un passage (700, 800) qui guide le détergent évacué de la pompe vers la cuve ; et
une pluralité de capteurs à électrode (301a, 301b, 301c) disposés au niveau d'un côté de la pluralité de cartouches ;
dans lequel chacun de la pluralité de capteurs à électrode (301a, 301b, 301c) comprend :
une plaque à électrode (321a, 321b, 321c) configurée pour détecter un signal électrique ; et
une borne (311a, 311b, 311c) destinée à transmettre le signal électrique détecté par la plaque à électrode,
dans lequel la plaque à électrode (321a, 321b, 321c) possède une première surface en contact avec le détergent contenu dans la cartouche et une seconde surface reliée à la borne,
**caractérisé en ce que** la plaque à électrode (321a, 321b, 321c) est disposée pour avoir, en position verticale, une largeur réduite (w2) au niveau d'une extrémité inférieure de celle-ci par rapport à une extrémité supérieure de celle-ci,
dans lequel une ouverture (216a, 216b, 216c) est formée au niveau d'une paroi arrière (212a) de la cartouche, et la plaque à électrode (321a, 321b, 321c) est disposée afin d'être en contact avec la paroi arrière (212a) de la cartouche de sorte que la première surface de celle-ci soit exposée à l'intérieur de la cartouche par le biais de l'ouverture, et
dans lequel l'ouverture (216a, 216b, 216c) est en contact avec l'extrémité inférieure de la plaque à électrode.

2. Lave-linge selon la revendication 1, dans lequel l'ouverture (216a, 216b, 216c) est à distance d'une surface inférieure (213a) de la cartouche (200).

3. Lave-linge selon la revendication 2, dans lequel le dispositif d'alimentation en détergent (100) comprend en outre une vanne d'arrimage (250) disposée au niveau d'un côté inférieur de la paroi arrière de la cartouche, la vanne d'arrimage (250) reliant la pompe (500) et la cartouche (200), dans lequel la vanne d'arrimage (250) est équipée d'une admission de détergent (211) par laquelle le détergent contenu dans la cartouche est aspiré dans la pompe, et l'ouverture (216a, 216b, 216c) est disposée à un emplacement situé plus haut que l'admission de détergent.

4. Lave-linge selon l'une quelconque des revendications précédentes, dans lequel le dispositif d'alimentation en détergent (100) comprend en outre un logement (110) destiné à contenir la cartouche (200), et
dans lequel la borne (311a, 311b, 311c) comprend :
une partie de liaison (311a1) reliée au logement ;
une première partie incurvée (311a2) courbée par rapport à la partie de liaison ; et
une seconde partie incurvée (311a3) courbée par rapport à la première partie incurvée et qui s'étend vers le haut, dans lequel la seconde partie incurvée comprend une partie en saillie (311a4) en contact avec la plaque à électrode (321a, 321b, 321c).

5. Lave-linge selon la revendication 4, dans lequel le logement (110) possède une paroi de liaison (111) disposée sur l'arrière de la cartouche (200), dans lequel la plaque à électrode est disposée entre la paroi de liaison (111) du logement et la paroi arrière de cartouche (212a) de la cartouche.

6. Lave-linge selon la revendication 5, dans lequel la partie de liaison (311a1) de la borne est reliée à la paroi de liaison (111), de préférence à une saillie (111a1) qui dépasse de la paroi de liaison (111) dans une direction opposée à la cartouche.

7. Lave-linge selon la revendication 6, dans lequel la paroi de liaison (111) possède une ouverture de paroi de liaison (112-1) formée dessus, et la plaque à électrode (321a, 321b, 321c) est en contact avec la partie en saillie (311a4) par le biais de l'ouverture de paroi de liaison (112-1).

8. Lave-linge selon l'une quelconque des revendications précédentes, la plaque à électrode ayant une forme de « L ».

9. Lave-linge selon l'une quelconque des revendications précédentes, dans lequel la pluralité de capteurs à électrode (301a, 301b, 301c) en comprend au moins deux disposés à des hauteurs différentes.

10. Lave-linge selon l'une quelconque des revendications précédentes, dans lequel, parmi la pluralité de capteurs à électrode (301a, 301b, 301c), trois sont disposés au niveau d'un côté de l'une de la pluralité de cartouches (200), dans lequel les plaques à électrode des trois capteurs à électrode comprennent une première et une seconde plaques à électrode (321a, 321b) positionnées à un première hauteur (H1) et une troisième plaque à électrode (321c) positionnée à une seconde hauteur (H2) supérieure à la première hauteur.

11. Lave-linge selon l'une quelconque des revendications précédentes, dans lequel le signal électrique est un courant électrique ou une tension électrique généré(e) entre les plaques à électrode de deux de la pluralité de capteurs à électrode qui sont disposés au niveau d'un côté de l'une de la pluralité de cartouches (200).
